# EUROPEAN PATENT APPLICATION

(11) **EP 4 629 232 A1**
(43) Date of publication of application: **08.10.2025**
(21) Application number: 23896541.2
(22) Date of filing: 15.11.2023
(51) Int. Cl.: G10L 15/26, G10L 25/63, G10L 25/51

(54) **INTERACTION METHOD AND APPARATUS, DEVICE, AND STORAGE MEDIUM**

(30) Priority: 30.11.2022 CN 202211529178
(71) Applicant: Lemon Inc., Grand Cayman, KY1-1205 (KY); Beijing Zitiao Network Technology Co., Ltd., Beijing 100190 (CN)
(72) Inventor: LI, Yunzhu, Los Angeles, California 90066 (US); SUN, Chenyu, Los Angeles, California 90066 (US); XIONG, Tao, Beijing 100028 (CN); CAI, Xuye, Beijing 100028 (CN); BI, Yifei, Beijing 100028 (CN)
(74) Representative: Grünecker Patent- und Rechtsanwälte PartG mbB
(86) International application number: PCT/CN2023/131880
(87) International publication number: WO 2024/114389

(57) **Abstract**

Embodiments of the present disclosure provide a method, apparatus, device and storage medium for interaction. The method includes performing speech recognition on an audio; if a first keyword is detected in the speech recognition, presenting a first visual element having a predefined visual effect corresponding to the first keyword, the first keyword being included within a predetermined range; and if a second keyword is detected in the speech recognition, presenting a second visual element associated with the second keyword, the second keyword being not included in the predetermined range. In this way, the vocabulary used by the user in the interaction can be enriched, and a personalized interaction effect is brought to the user.

## Description

This application claims the benefit of Chines Patent Application No. 202211529178.6, filed Nov. 30, 2022, entitled "INTERACTION METHOD, APPARATUS, DEVICE AND STORAGE MEDIUM", the entire content of which is incorporated herein by reference.

### FIELD

Example embodiments of the present disclosure generally relate to the field of computers, and in particular, to a method, apparatus, device, and computer-readable storage medium for interaction.

### BACKGROUND

Currently, more and more applications are designed to provide various services to users. The user may perform various operations on the application to perform human-computer interaction or perform social interaction with other users. In recent years, speech recognition based interaction technology has developed rapidly. This interaction technology supports natural language input, thereby achieving natural human-computer interaction. The manner and effect of these interaction techniques directly affect the user's experience during the interaction process.

### SUMMARY

In a first aspect of the present disclosure, an interaction method is provided. The method includes: performing speech recognition on an audio; if a first keyword is detected in the speech recognition, presenting a first visual element having a predefined visual effect corresponding to the first keyword, the first keyword being included within a predetermined range; and if a second keyword is detected in the speech recognition, presenting a second visual element associated with the second keyword, the second keyword being not included in a predetermined range.

In a second aspect of the present disclosure, an apparatus for interaction is provided. The apparatus includes: a speech recognition module configured to perform speech recognition on an audio; a first visual element presentation module configured to present a first visual element having a predefined visual effect corresponding to the first keyword if a first keyword is detected in the speech recognition, the first keyword being included within a predetermined range; and a second visual element presentation module configured to present a second visual element associated with the second keyword if a second keyword is detected in the speech recognition, the second keyword being not included in a predetermined range.

In a third aspect of the present disclosure, an electronic device is provided. The apparatus includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium stores a computer program, and the computer program is executable by the processor to implement the method of the first aspect.

It should be understood that the content described in the content part of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure can be implemented;
FIG. 2 shows a flowchart of an example interaction process according to some embodiments of the present disclosure;
FIGS. 3A and 3B illustrate schematic diagrams of multiple examples of presenting a visual element with a predefined visual effect according to some embodiments of the present disclosure;
FIGS. 4A to 4C illustrate schematic diagrams of multiple examples of presenting a visual element based on an emotion associated with a custom word in accordance with some embodiments of the present disclosure;
FIGS. 5A to 5C illustrate schematic diagrams of multiple examples of presenting a visual element based on a reference word according to some embodiments of the present disclosure;
FIG. 6 illustrates a schematic diagram of an example of presenting text of a custom word according to some embodiments of the present disclosure;
FIG. 7 shows a block diagram of an apparatus for interaction according to some embodiments of the present disclosure; and
FIG. 8 illustrates a block diagram of a device capable of implementing various embodiments of the present disclosure.

### DETAILED DESCRIPTION

It can be understood that, before the technical solutions disclosed in the embodiments of the present disclosure are used, the types of personal information related to the present disclosure, the usage scope, the usage scenario and the like should be notified to the user in an appropriate manner according to the relevant laws and regulations and obtain the authorization of the user.

For example, in response to receiving an active request from a user, prompt information is sent to the user to explicitly prompt the user that the requested operation will need to acquire and use the personal information of the user. Therefore, the user can autonomously select whether to provide personal information to software or hardware executing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "disagree" to provide personal information to the electronic device.

It may be understood that the foregoing notification and obtaining a user authorization process is merely illustrative, and does not constitute a limitation on implementations of the present disclosure, and other manners of meeting related laws and regulations may also be applied to implementations of the present disclosure.

It may be understood that the data involved in the technical solution (including but not limited to the data itself, the acquisition or use of the data) should follow the requirements of the corresponding laws and regulations and related regulations.

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for example purposes only and are not intended to limit the scope of the present disclosure.

It should be noted that the title of any section/subsection provided herein is not limiting. Various embodiments are described throughout and any type of embodiments may be included in any section/subsection. Furthermore, the embodiments described in any section/subsection may be combined in any manner with the same section/subsection and/or any other embodiment described in different sections/subsections.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

As used herein, the term "model" may learn associations between respective inputs and outputs from training data such that corresponding outputs may be generated for a given input after training is complete. The generation of the model may be based on machine learning techniques. Deep learning is a machine learning algorithm that processes inputs and provides corresponding outputs by using a multi-layer processing unit. "Model" may also be referred to herein as a "machine learning model," "machine learning network," or "network," which terms are used interchangeably herein. A model may in turn include different types of processing units or networks.

As used herein, a "unit," an "operation unit," or a "subunit" may be composed of a machine learning model or network of any suitable structure. As used herein, a set of elements or similar expressions may include one or more such elements. For example, a "set of convolution units" may include one or more convolution units.

As mentioned briefly above, the speech recognition based interaction technology develops rapidly, and the user experience is greatly improved. In some conventional solutions that support speech recognition, a large number of words are predetermined or a plurality of word libraries including different types of words are prestored. When it is detected that the speech of the user includes a predetermined word or a word in the pre-stored word library, an interaction effect is triggered, for example, a corresponding instruction is executed. However, these conventional solutions cannot recognize a custom word in the user's speech, or they can recognize a keyword but do not have a predetermined corresponding interaction effect, thereby causing a lag or even a blank in the user interface and reducing the user experience.

Embodiments of the present disclosure provide a solution for interaction. According to various embodiments of the present disclosure, speech recognition is performed on an input audio. The performed speech recognition can detect a keyword not included within a predetermined range. If such a keyword is detected, a visual element associated with the keyword is presented. In this way, the vocabulary used by the user in the interaction can be enriched, and a personalized interaction effect is brought to the user. Therefore, the user can obtain an interesting interaction process and improve the user experience.

Example implementations of the present disclosure will be described in detail below with reference to the accompanying drawings.

### Example Environment

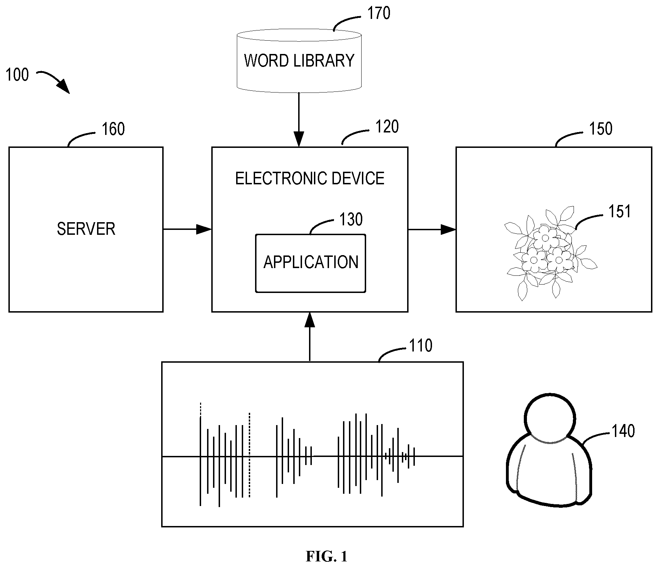

FIG. 1 illustrates a schematic diagram of an example environment 100 in which embodiments of the present disclosure can be implemented. In the environment 100, an application 130 is installed in an electronic device 120. A user 140 may interact with the application 130 via the electronic device 120 and/or an attachment device of the electronic device 120. The application 130 may be an application that supports human-computer interaction or interpersonal interaction. For example, the application 130 may be a content sharing application capable of providing at least the user 140 with services related to media content consumption.

During human-computer interaction or interpersonal interaction, the electronic device 120 receives an audio 110 and performs speech recognition. The electronic device 120 may present a user interface 150 of the application 130 to the user 140 for the user 140 to view a visual element 151 corresponding to the audio 110, such as a bunch of flowers shown in FIG. 1. The visual elements 151 may be presented in a two-dimensional, three-dimensional, or animated form in the user interface 150. In some embodiments, the user interface 150 may be part of a virtual reality or augmented reality scene.

The electronic device 120 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the electronic device 120 can also support any type of interface for a user (such as a "wearable" circuit, etc.).

In some embodiments, the electronic device 120 communicates with a server 160 to enable provisioning of services to the application 130. The server 160 is various types of computing systems/servers capable of providing computing power, including, but not limited to, mainframes, edge computing nodes, computing devices in a cloud environment, and the like.

The environment 100 may also include a library 170 of universal keywords for speech recognition, which is also referred to simply as a word library 170. The word library 170 may include any suitable type of word. In some embodiments, the word library 170 may include predetermined keywords corresponding to one or more predetermined categories. The predetermined category may indicate various suitable types of objects or entities. For example, the predetermined category may be food, and the predetermined keyword in the word library 170 may include various words related to the food, such as "hamburger", "pizza", "noodle", and the like. For another example, the predetermined category may be a vehicle, and the predetermined keyword in the word library 170 may include various words related to the vehicle, such as "bicycle", "bus", "aircraft", "train", and the like. Algorithms for speech recognition have learned universal keywords in word library 170. For example, the speech recognition model may be trained using these general keywords. The word library 170 may be stored locally at the electronic device 120 or may be stored at other devices accessible to the electronic device 120.

It should be understood that the structure and function of the environment 100 is described for example purposes only and does not imply any limitation to the scope of the present disclosure. The user interface and visual elements shown in FIG. 1 are examples only and are not intended to limit the scope of the present disclosure.

### Example Process

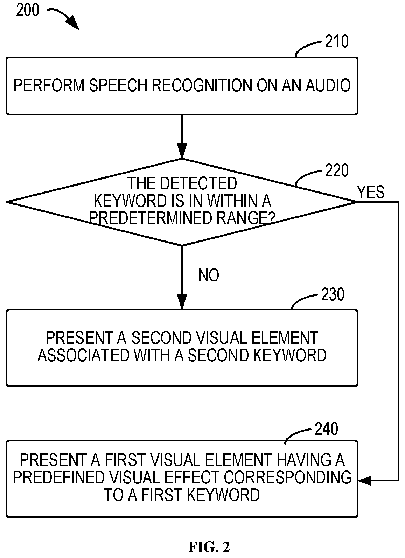

FIG. 2 illustrates a flowchart of an example interaction process 200 according to some embodiments of the present disclosure. In some embodiments, the process 200 may be implemented at electronic device 120, such as by the application 130 or other suitable module/device. For illustrative purposes only, the process 200 is described below with reference to FIG. 1.

At block 210, the electronic device 120 performs speech recognition on the audio 110. The audio 110 may be pre-recorded and stored. For example, the audio 110 may be played or sent to the electronic device 120 via other devices, and then received by the electronic device 120 and the electronic device 120 performs speech recognition on the audio 110. As another example, the audio 110 may be stored locally in the electronic device 120. Upon detecting a trigger operation (e.g., the user 140 selected the stored audio 110), the electronic device 120 may perform speech recognition on the audio 110.

In some embodiments, the audio 110 may be obtained in real-time, and speech recognition is also performed in real-time. For example, the audio 110 may come from a real-time interaction of the user 140 with the application 130. During the interaction with the application 130, the audio recorded by the user 140 is received by the electronic device 120 and the electronic device 120 performs speech recognition thereon. In this embodiment, by receiving the voice input in real time, an interesting interactive experience may be brought to the user.

In some embodiments, to obtain the audio 110, the user 140 may be guided. Specifically, a prompt may be presented to guide the user 140 to speak a keyword that is within a predetermined range and an input that includes the audio 110 is received. Such a prompt may be a voice prompt, a text prompt, a graphical prompt, or a combination thereof.

In some embodiments, the predetermined range may be a library of general keywords for speech recognition, such as the word library 170 described with reference to FIG. 1. In some embodiments, the predetermined range may be a range related to one or more predetermined types of objects. For example, various words related to fruit may constitute a predetermined range. As another example, various words related to food and vehicles may constitute a predetermined range. In some embodiments, the predetermined range may be a set of words previously selected from a universal dictionary. For example, a certain number of words may be selected to constitute the predetermined range. The word may be selected according to a predetermined rule, or the word may be randomly selected.

As one example, a text prompt of "say a fruit" may be displayed on the user interface 150 to guide the user 140 to speak words within the predetermined range of "fruit". For example, the user 140 speaks "Banana", and the electronic device 120 receives the user's speech as the audio 110 through a sound input device (e.g., a microphone).

The electronic device 120 may perform speech recognition in any suitable manner. In some embodiments, the electronic device 120 may perform speech recognition based on a pattern matching method. For example, before the pattern matching method is applied, a feature vector of each keyword in the word library 170 may be obtained as a template to be stored into a template library. In the speech recognition stage, the electronic device 120 compares the feature vector of the speech in the audio 110 with each template in the template library, and uses the one with the highest similarity as the recognition result.

In some embodiments, the electronic device 120 may perform the speech recognition by using a neural network-based keyword detection system. For example, the keyword detection system may include an acoustic extraction feature network and a recognition network. The audio 110 is preprocessed by the acoustic extraction feature module, and a recognition result is output through the recognition network. Compared with a traditional keyword detection system, the recognition accuracy of the neural network-based keyword detection system is higher.

At block 220, the electronic device 120 determines whether the keyword detected in the speech recognition is within a predetermined range. For example, the electronic device 120 may determine the keyword by using a speech recognition algorithm, and then determine whether the keyword is included in the word library 170. If the keyword is included in the word library 170, it is considered that the keyword included in the predetermined range is detected. If the keyword is not included in the word library 170, it is considered that the keyword that is not included in the predetermined range is detected. In addition, although blocks 210 and 220 are shown separately, in some embodiments, whether the keyword is within a predetermined range may be determined when the speech recognition is performed.

In particular, in some embodiments, the keyword that is not included within a predetermined range may be a custom word not included in a general dictionary. A custom word may be a word created by the user 140 or a word created by others but propagated within a certain range, such as a newly occurring network word. The custom word may be a word that is spoken when the user 140 is unconscious or conscious.

Any suitable speech recognition algorithm may be employed to identify the custom words. As an example, a byte pair encoding (BPE) algorithm may be used. Specifically, if the audio 110 includes a word not learned by the algorithm in the learning process, the word is split into a plurality of segments (e.g., subwords). Each segment corresponds to a word that the algorithm has learned. In this order, a custom word may be identified.

The process 200 continues. If it is determined at block 220 that a first keyword included within the predetermined range is detected, the process 200 proceeds to block 240. At block 240, the electronic device 120 presents a first visual element having a predefined visual effect corresponding to the first keyword. The visual effect of the visual element may be fixed. Alternatively, the visual effect of the visual element may be selected from a plurality of predefined visual effects, for example, randomly selected.

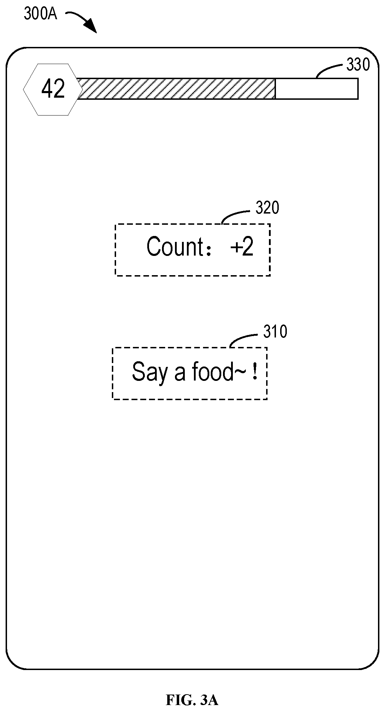

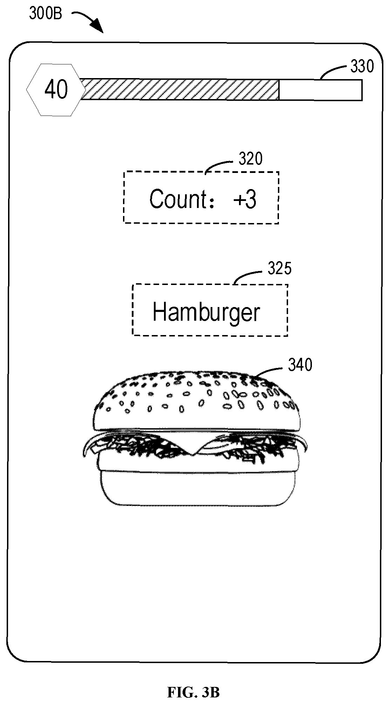

One example is described with reference to FIGS. 3A and 3B. FIGS. 3A and 3B illustrate an example user interface 300A and user interface 300B presenting visual elements with predefined visual effects, in accordance with some embodiments of the present disclosure. The user interface 300A and user interface 300B may be implemented at the electronic device 120.

As an example, as shown in FIG. 3A, the electronic device 120 displays prompt information 310, such as "Say a food" in the user interface 300A. In this case, words related to "food" is the predetermined range. The user 140 issues a speech including a word or sentence of "hamburger". The electronic device 120 receives the audio and performs speech recognition, and then compares the detected keyword "hamburger" with the keyword in the word library 170 to determine that the keyword "hamburger" is included in the word library 170. Further, the electronic device 120 determines a predefined visual effect corresponding to the keyword. The predefined visual effect may be in the form of a two-dimensional, three-dimensional, or animation. For example, the predefined visual effect corresponding to the keyword "hamburger" may be a two-dimensional picture including one hamburger or may be a three-dimensional picture including a plurality of hamburgers, or may be an animation of making a hamburger. The electronic device 120 may randomly select one of them as the second visual element to be presented in the user interface 150. Additionally or alternatively, the electronic device 120 may also present the identified keywords in the user interface 150. As shown in FIG. 3B, an image 340 of the hamburger and text 325 of the keyword "hamburger" is presented in the user interface 300A.

In some embodiments, the electronic device 120 may also present a further visual element, such as a score 320, progress bar 330, etc., in the user interface 150. The progress bar 330 may be a countdown bar for prompting the user of the remaining interaction time or the elapsed interaction time. The score 320 may be used to prompt the user of a score and a number of times that the keyword is currently successfully recognized and the visual element is presented.

As an example, referring to FIG. 3A and FIG. 3B, the user 140 issues a real-time speech including a word or sentence of "hamburger" according to the prompt information 310 in the user interface 150, and the electronic device 120 performs speech recognition in real time and determines that "hamburger" is included in the universal keyword library. The electronic device 120 presents the picture and keyword of the hamburger in the user interface 150. In this process, the progress bar 330 of the user interface 150 is counting down from 42 seconds to 40 seconds, and the score 320 is from + 2 to + 3. This means that the keyword is successfully recognized this time and a visual element is presented, and thus the score is increased by 1. In this way, the fun and interaction experience of the user can be improved.

With continued reference to FIG. 2, if it is determined at block 220 that a second keyword that is not included within the predetermined range is detected in the speech recognition, the process 200 proceeds to block 230.

At block 230, the electronic device 120 presents a visual element (also referred to as a "second visual element") associated with the second keyword. The second visual element may be presented in the user interface 150 in a two-dimensional, three-dimensional, or animated form. Since the second keyword is not included in the predetermined range, that is, the occurrence of such a word cannot be "pre-judged", one or more visual effects may not be predefined as in the predetermined range. In view of this, the visual effect of the presented visual element may be determined by analyzing the characteristics of the second keyword. Some example embodiments are described below by taking the second keyword as a custom word as an example. It should be understood, however, that the processing of keywords that are not within the predetermined range and other than the custom words is similar.

In some embodiments, the electronic device 120 may present a visual element representing an emotion associated with a custom word. Such a visual element may be a punctuation mark corresponding to an emotion, such as an expression of the emotion. For example, a question mark may correspond to an emotion of the question, an exclamation point may correspond to an emotion of the excitement, an ellipsis may correspond to an emotion of helplessness, and the like. Alternatively or additionally, the visual element may be an emoticon corresponding to an emotion. For example, a smiling face corresponds to a happy emotion, a crying face corresponds to a sad emotion, an angry face corresponds to an angry emotion, and the like. Alternatively or additionally, the visual element may be a weather symbol corresponding to an emotion. For example, a cloudy day may correspond to a sad emotion, a sunny day may correspond to a happy emotion, a rainy day may correspond to a sad emotion, cloudiness may correspond to a calm emotion, sunshine may correspond to an excited emotion, and the like. The visual elements may also be other types of symbols that express emotions. Embodiments of the present disclosure are not limited in this respect.

Since the custom word may be a word self-generated by the user or spoken unconsciously, the electronic device 120 may not find the matched keyword in the universal keyword library, or does not pre-store the visual effect corresponding thereto. Accordingly, the electronic device 120 needs to analyze the emotion associated with the custom word and present the second visual element according to the emotion associated with the custom word.

In some embodiments, to determine the emotion associated with the custom word, the electronic device 120 may analyze the emotion embodied in the voice spoken by the custom word. For example, the emotion of the user 140 when speaking the custom word may be analyzed. The speech emotion feature may be classified into a language feature and an acoustic feature. The language feature is speech information to be expressed by speech, and the electronic device 120 may determine whether a custom word is detected according to the language feature. The acoustic feature includes tone and intonation of the speaker, thereby emotional colors are embodied. The electronic device 120 determines the emotion embodied in the speech, for example, by extracting an emotional acoustic feature with a high correlation degree. An emotion obtained in this manner may be used as an emotion associated with the custom word.

Alternatively or additionally, in some embodiments, the electronic device 120 may determine an emotion associated with the custom word based on the emotion indicated by at least a portion of the custom word. The custom word itself may be unlearned by the speech recognition algorithm, but a portion of the custom word may be learned by the speech recognition algorithm. For example, a segment of a custom word may be matched to one or more generic keywords by the BPE algorithm mentioned above. The emotion indicated by one of these general keywords may be determined as the emotion associated with the custom word.

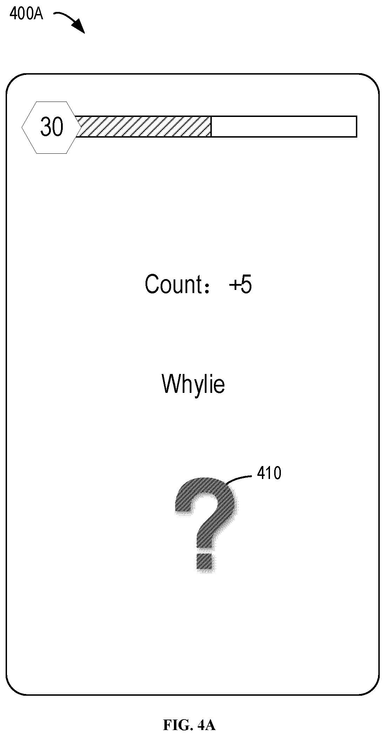

FIGS. 4A to 4C illustrate example user interfaces 400A to 400C presenting visual elements based on emotions associated with the custom words, in accordance with some embodiments of the present disclosure. The user interface 400A to user interface 400C may be implemented at the electronic device 120.

As previously described, the visual element may be a punctuation corresponding to an emotion. In the example of FIG. 4A, the electronic device 120 detects a custom word "whylie". The electronic device 120 recognizes that a starting portion of the word is the generic word "why". Accordingly, the visual symbol expressing a confusion emotion of the general word "why" may be presented. In this example, the electronic device 120 displays a question mark 410, i.e., "?" in user interface 400A. Further, if the tone when the user 140 speaks the custom word is strong, the electronic device 120 may display a plurality of visual symbols, such as a plurality of question marks "?" in the user interface.

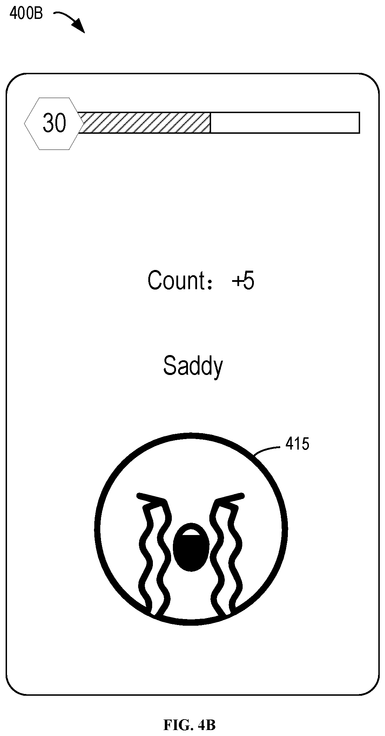

As described above, the visual element may be an emoticon corresponding to an emotion, such as a smiley face, a cry face, an angry face, or the like. In the example of FIG. 4B, the electronic device 120 detects a custom word "saddy". The electronic device 120 recognizes that the starting portion of the word is the general word "sad". Accordingly, an emoticon expressing a sad, a wounded, or a low emotion of the general word "sad" may be presented. In this example, the electronic device 120 displays the cry face 415 in the user interface 400B for representing the wounded emotion.

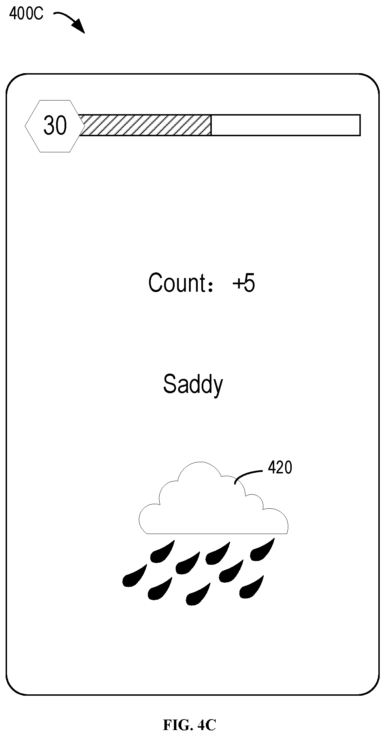

As previously described, the visual element may be a weather symbol corresponding to the emotion. Continuing with the above example of defining the word "Saddy". In the example of FIG. 4C, the electronic device 120 displays the rain cloud symbol 420 in the user interface 400C to represent the sad, wounded, low emotion.

It should be understood that the custom words and visual elements shown with reference to FIGS. 4A to 4C are merely examples and are not intended to limit the scope of the present disclosure.

Reference is continued to FIG. 2. In some embodiments, at block 230, the electronic device 120 may determine a reference word similar to at least a portion of the custom word and present an element having a predefined visual effect corresponding to the reference word. The reference word may be similar to a custom word in one or more aspects such as emotion, semantics, pronunciation, spelling, and the like. The reference word may include one or more words.

In some embodiments, to determine the reference word, the electronic device 120 may select, within a predetermined range, a keyword similar to the custom word in one or more aspects such as emotion, semantics, pronunciation, spelling, and the like as the reference word. For example, a keyword similar thereto may be determined as a reference word according to a segment split from the custom word. For example, the reference word may be selected from the word library 170. Alternatively, the reference word may be selected from a backup word library that is different from the word library 170.

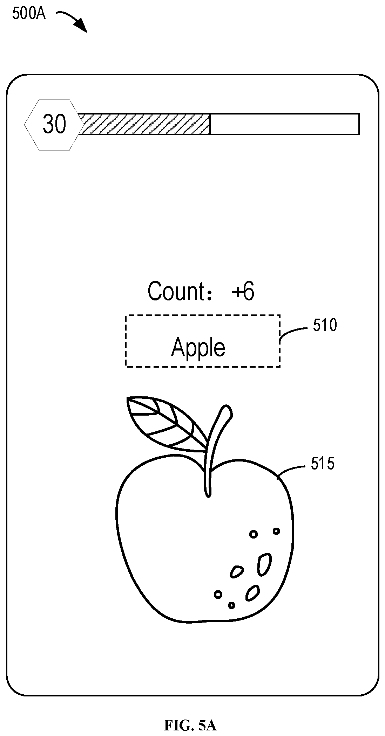

FIGS. 5A to 5C illustrate example user interfaces 500A to 500C presenting visual elements based on reference words, in accordance with some embodiments of the present disclosure. The user interfaces 500A to 500C may be implemented at the electronic device 120.

As one example, the electronic device 120 detects a custom word "applemelo". For example, the electronic device 120 performs semantic recognition on "applemloo", and determines that a reference word similar to the custom word is "apple" (apple). The electronic device 120 further determines that the predefined visual effect corresponding to the reference word "apple" includes an image of apple. In the example of FIG. 5A, the electronic device 120 displays an image 515 of apple in the user interface 500A.

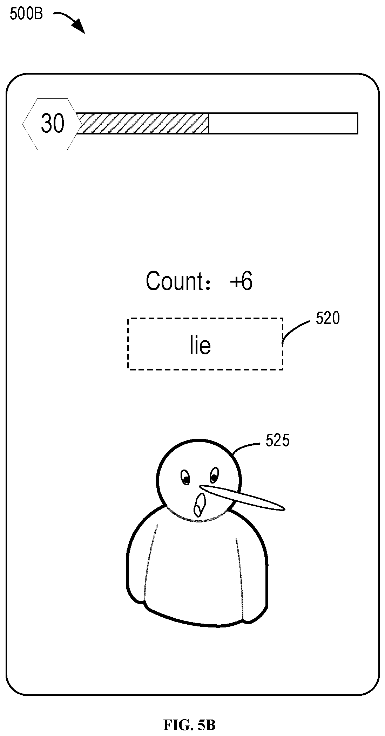

As another example, the electronic device 120 detects a custom word "Hylie". The electronic device 120 performs semantic recognition on "Hylie", and determines that a reference word similar to the custom word is "lie". In the example of FIG. 5B, electronic device 120 displays, in the user interface 500B, a person 525 with a long nose or Pinocchio.

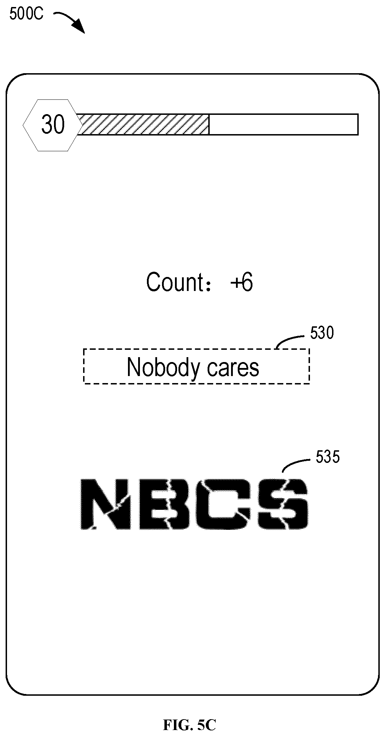

As yet another example, the electronic device 120 detects a custom word "NBCS". This custom word comes from the user 140's spelling of each letter. The electronic device 120 matches the letters in the common sentence in the general keyword library, and determines that the similar reference word is "Nobody cares". As shown in FIG. 5C, the electronic device 120 presents, in the user interface 500C, an element 535 having a predefined visual effect corresponding to the reference word "Nobody cares".

Additionally, in some embodiments, the electronic device 120 may also present text of the reference word in the user interface 150. For example, in the example of FIG. 5A, the text 510 of the reference word "apple" is displayed, the text 520 of the reference word "lie" is displayed in the example of FIG. 5B, and the text 530 of the reference word "Nobody cares" is displayed in the example of FIG. 5C.

Additionally or alternatively, in some embodiments, if a plurality of reference words are determined, the electronic device 120 may respectively present, in different regions of the user interface, an element having a predefined visual effect corresponding to each of the plurality of reference words, or fuse and present elements corresponding to the plurality of reference words in the user interface.

Reference is continued to FIG. 2. In some embodiments, at block 230, the electronic device 120 may utilize a text to image technique. Specifically, the target image may be generated based on the text associated with the custom word by using a text to image generation model, and the target image is presented. For example, a portion or all of the text of the custom word may be input to the text-to-image generation model. The text-to-image generation model generates the target image accordingly.

At block 230, the electronic device 120 may present the visual element associated with the custom word in other suitable manners. For example, the text of the custom word may be directly presented. Further, the presented text may have a certain visual effect, such as an artistic word.

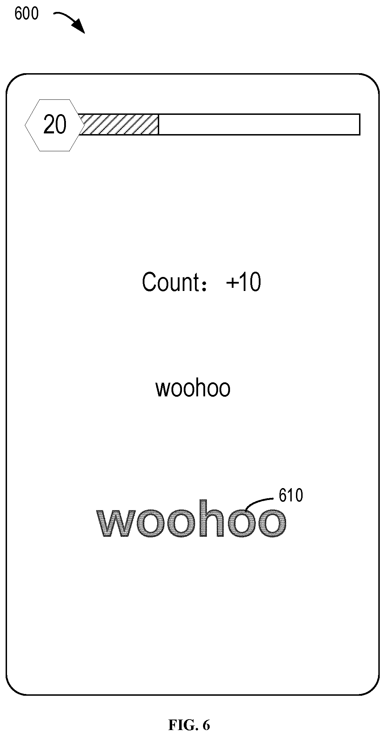

FIG. 6 illustrates a user interface 600 presenting text of a custom word, in accordance with some embodiments of the present disclosure. The user interface 600 may be implemented at the electronic device 120. As an example, the electronic device 120 detects a custom word "woohoo". In the example of FIG. 6, the electronic device 120 displays in the user interface 600 the text generation element "woohoo" 610 that may have a certain visual effect.

With reference to the above embodiments, various ways of presenting visual elements associated with a custom word at block 230 are described. It should be understood that these approaches may be combined in some embodiments. For example, an emotion associated with a custom word may be analyzed first. In the case that no emotion is found or no visual symbol corresponding to the emotion can be determined, a reference word may be searched. As another example, a reference word may be searched first. If no matching reference word is found, an emotion associated with the custom word may be analyzed. In addition, the visual element presentation manner described with reference to the custom word may be similarly applied to other keywords not included in the predetermined range.

Although examples of different first and second visual elements are described above and in the drawings, this is merely an example and not intended to be limiting. In some embodiments, the first visual element may be the same as the second visual element. For example, for the second keyword that is not included in the predetermined range, the first keyword included in the predetermined range is selected as the reference word. In this case, the second visual element presented is the same as the first visual element. As an example, the first keyword may be "banana" and the second keyword may be "bana". In this case, the second visual element may have a visual effect of the banana.

In conclusion, according to various embodiments of the present disclosure, the electronic device 120 may receive the audio 110 and perform speech recognition. If a keyword included within a predetermined range is detected, the electronic device 120 presents a predetermined visual effect. If a keyword not associated with a predetermined category is detected, the electronic device 120 may determine a visual element associated with the keyword in one or more of a number of ways and present the visual element in the user interface. Therefore, an interesting visual effect can be presented to the user in the human-computer interaction or interpersonal interaction process, so that the user experience is improved.

### Example Apparatus and Device

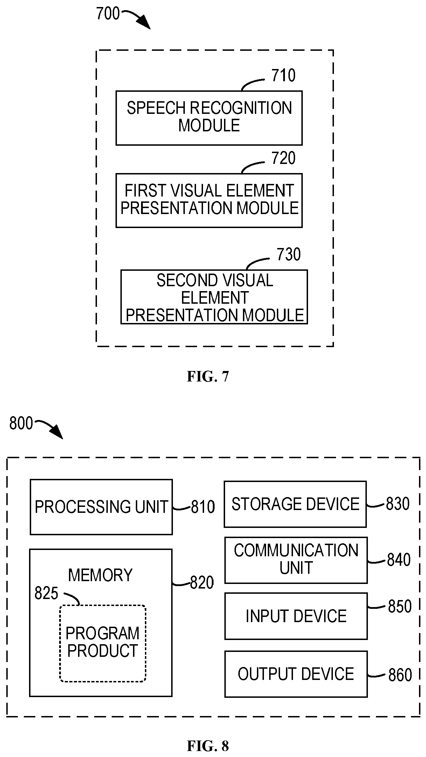

FIG. 7 is a schematic structural block diagram of an interaction apparatus 700 according to some embodiments of the present disclosure. The apparatus 700 may be implemented or included in the electronic device 120. The various modules/components in the apparatus 700 may be implemented by hardware, software, firmware, or any combination thereof.

As shown, the apparatus 700 includes a speech recognition module 710 configured to perform speech recognition on an audio. The apparatus 700 further includes a first visual element presentation module 720 configured to present, if a first keyword is detected in the speech recognition, a first visual element having a predefined visual effect corresponding to the first keyword, the first keyword being included in a predetermined range. The apparatus 700 further includes a second visual element presentation module 730 configured to present a second visual element associated with the second keyword if the second keyword is detected in the speech recognition, the second keyword being not included in the predetermined range.

In some embodiments, the second visual element presentation module 730 is further configured to present a visual element representing an emotion associated with the second keyword.

**In** some embodiments, the visual element representing the emotion includes at least one of: a punctuation mark corresponding to the emotion, an emoticon corresponding to the emotion, and a weather symbol corresponding to the emotion.

In some embodiments, the second visual element presentation module 730 is further configured to: determine an emotion associated with the second keyword based on at least one of the following: an emotion indicated by at least a part of the second keyword, and an emotion embodied in the spoken voice.

In some embodiments, the second visual element presentation module 730 is further configured to: determine a reference word similar to at least a portion of the second keyword in at least one of the following aspect: emotion, semantics, pronunciation, or spelling; and present an element having a predefined visual effect corresponding to the reference word.

In some embodiments, to determine the reference word, the second visual element presentation module 730 is further configured to: select, within a predetermined range, a keyword that is similar to at least a portion of the second keyword in at least one aspect as the reference word.

In some embodiments, the second visual element presentation module 730 is further configured to: generate a target image by using the text-to-image generation model based on the text associated with the second keyword; and present the target image.

In some embodiments, the apparatus 700 further includes an audio obtaining module configured to obtain the audio in the following manner: presenting a prompt that guides the user to speak a keyword within a predetermined range; and receiving an input including the audio.

FIG. 8 illustrates a block diagram of a computing device 800 in which one or more embodiments of the present disclosure may be implemented. It should be understood that the computing device 800 shown in FIG. 8 is merely an example and should not constitute any limitation on the functionality and scope of the embodiments described herein. The computing device 800 shown in FIG. 8 may be configured to implement the electronic device 120 in FIG. 1.

As shown in FIG. 8, the computing device 800 is in the form of a general-purpose computing device. Components of the computing device 800 may include, but are not limited to, one or more processors or processing units 810, a memory 820, a storage device 830, one or more communication units 840, one or more input devices 850, and one or more output devices 860. The processing unit 810 may be an actual or virtual processor and capable of performing various processes according to programs stored in the memory 820. In multiprocessor systems, multiple processing units execute computer-executable instructions in parallel to improve parallel processing capabilities of computing device 800.

Computing device 800 typically includes a plurality of computer storage media. Such media may be any available media accessible by the computing device 800, including, but not limited to, volatile and non-volatile media, removable and non-removable media. The memory 820 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 830 may be a removable or non-removable medium and may include a machine-readable medium, such as a flash drive, magnetic disk, or any other medium, which may be capable of storing information and/or data (e.g., training data for training) and may be accessed within computing device 800.

The computing device 800 may further include additional removable / non-removable, volatile / non-volatile storage media. Although not shown in FIG. 8, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 820 may include a computer program product 825 having one or more program modules configured to perform various methods or actions of various embodiments of the present disclosure.

The communications unit 840 implements communications with other computing devices over a communications medium. Additionally, the functionality of components of the computing device 800 may be implemented in a single computing cluster or multiple computing machines capable of communicating over a communication connection. Thus, the computing device 800 may operate in a networked environment using logical connections with one or more other servers, network personal computers (PCs), or another network node.

The input device 850 may be one or more input devices such as a mouse, a keyboard, a trackball, or the like. The output device 860 may be one or more output devices, such as a display, a speaker, a printer, or the like. Computing device 800 may also communicate with one or more external devices (not shown) as needed, external devices such as storage devices, display devices, etc. , communicate with one or more devices that enable a user to interact with computing device 800, or communicate with any device (e.g., network card, modem, etc.) that enables computing device 800 to communicate with one or more other computing devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions / acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions / acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions / acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are examples, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method of interaction, comprising:
performing speech recognition on an audio;
in accordance with a determination that a first keyword is detected in the speech recognition, presenting a first visual element having a predefined visual effect corresponding to the first keyword, the first keyword being comprised within a predetermined range; and
in accordance with a determination that a second keyword is detected in the speech recognition, presenting a second visual element associated with the second keyword, the second keyword being not comprised in the predetermined range.

2. The method of claim 1, wherein presenting the second visual element comprises:
determining a reference word similar to at least a portion of the second keyword in at least one of the following aspect:
emotion,
semantics,
pronunciation, or
spelling; and
presenting an element having a predefined visual effect corresponding to the reference word.

3. The method of claim 2, wherein determining the reference word comprises:
selecting, within the predetermined range, a keyword similar to at least the portion of the second keyword in the at least one aspect as the reference word.

4. The method of claim 1, wherein presenting the second visual element comprises:
presenting a visual element representing an emotion associated with the second keyword.

5. The method of claim 4, wherein the visual element representing the emotion comprises at least one of:
a punctuation mark corresponding to the emotion,
an emoticon corresponding to the emotion, or
a weather symbol corresponding to the emotion.

6. The method of claim 5, wherein the emotion associated with the second keyword is determined based on at least one of:
an emotion indicated by at least a portion of the second keyword, or
an emotion embodied in a spoken voice of the second keyword.

7. The method of claim 1, wherein presenting the second visual element comprises:
generating a target image by using a text to image generation model based on text associated with the second keyword; and
presenting the target image.

8. The method of claim 1, wherein the audio is obtained by:
presenting a prompt to guide a user to speak a keyword comprised within the predetermined range;
and
receiving an input comprising the audio.

9. An apparatus for interaction, comprising:
a speech recognition module, configured to perform speech recognition on an audio;
a first visual element presentation module, configured to in accordance with a determination that a first keyword is detected in the speech recognition, present a first visual element having a predefined visual effect corresponding to the first keyword, the first keyword being comprised within a predetermined range; and
a second visual element presentation module, configured to in accordance with a determination that a second keyword is detected in the speech recognition, present a second visual element associated with the second keyword, the second keyword being not comprised in the predetermined range.

10. The apparatus of claim 9, wherein the second visual element presentation module is further configured to:
determine a reference word similar to at least a portion of the second keyword in at least one of the following aspect:
emotion,
semantics,
pronunciation, or
spelling; and
present an element having a predefined visual effect corresponding to the reference word.

11. The apparatus of claim 9, wherein the second visual element presentation module is further configured to:
present a visual element representing an emotion associated with the second keyword.

12. The apparatus of claim 9, further comprising an audio obtaining module configured to obtain the audio by:
presenting a prompt to guide a user to speak a keyword comprised within the predetermined range;
and
receiving an input comprising the audio.

13. An electronic device comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 8.

14. A computer-readable storage medium having stored thereon a computer program executable by a processor to implement the method of any of claims 1 to 8.
